# EUROPEAN PATENT APPLICATION

(11) **EP 3 869 453 A1**
(43) Date of publication of application: **25.08.2021**
(21) Application number: 20159151.8
(22) Date of filing: 24.02.2020
(51) Int. Cl.: G06T 7/00

(54) **PROCESSING A MEDICAL IMAGE TO PROVIDE A VISUAL INDICATOR**

(71) Applicant: Siemens Healthcare GmbH, 91052 Erlangen (DE)
(72) Inventor: YEREBAKAN, Halid, 19355 Malvern, Pennsylvania (US); ZENG, Ke, 19010 Bryn Mawr, Pennsylvania (US); JEREBKO, Anna, 19301 Paoli, Pennsylvania (US); BHATIA, Parmeet, 19301 Paoli, Pennsylvania (US)
(74) Representative: EIP

(57) **Abstract**

Disclosed is a computer-implemented method, an apparatus, and a computer program product for processing medical image data. Medical image data is received and a plurality of sets of data are derived from the medical image data. Each of the plurality of sets of data comprises an image descriptor of an image of a respective medical abnormality candidate in an original medical image. A clustering algorithm is applied to the plurality of sets of data to generate a plurality of groups based on a similarity between image descriptors of the plurality of sets of data, each of the plurality of groups comprising one or more of the plurality of sets of data, the plurality of groups including at least a first group comprising a first plurality of the sets of data. A visual indicator is generated to associate the first plurality of sets of data together.

## Description

### Technical Field

The present invention relates to processing medical image data, in particular medical image data indicating one or more medical abnormality candidates.

### Background

Medical imaging techniques may be used to obtain information regarding a human body, in particular to detect medical abnormalities in the body. For example, Magnetic Resonance Imaging (MRI) can be used to image tissues of the body.

To detect these abnormalities, automated algorithms may be used. For example, automated detection of such abnormalities helps radiologists to read and assess medical images more efficiently. However, in some cases the automated algorithms may generate a large number of medical abnormality candidates, which may be referred to as findings. This is due to several reasons such as comorbidities, metastases, bone deformations, and some diseases which cause multiple lesions of a similar kind.

In these cases, excessive amounts of time may be spent by radiologists who must navigate through all the findings to verify if a new distinct disease is present or not in the image data.

A typical approach to handle these excessive findings comprises using filtering techniques to cap the maximum number to a certain limit. Often, however this threshold is set high so as not to exclude identification of any real abnormalities.

Alternative methods to handle excessive results are directed towards reducing false positives in the data. This is achieved by using more complex automated algorithms and a greater volume of training data. However, particularly in medically unusual cases, false positives can still occur, even when the best models are used.

It is an object of the present invention to address at least some of these challenges associated with processing and visualizing medical image data.

### Summary

According to a first aspect of the present invention, there is provided a computer-implemented method for processing medical image data. The method comprises receiving medical image data, and deriving, from the medical image data, a plurality of sets of data, each of the plurality of sets of data comprising an image descriptor of an image of a respective medical abnormality candidate in an original medical image; applying a clustering algorithm to the plurality of sets of data to generate a plurality of groups based on a similarity between image descriptors of the plurality of sets of data, each of the plurality of groups comprising one or more of the plurality of sets of data, the plurality of groups including at least a first group comprising a first plurality of the sets of data; and generating a visual indicator to associate the first plurality of sets of data together.

This first aspect advantageously provides a method of processing medical image data by grouping together findings using clustering techniques based on an image descriptor of an image of a respective medical abnormality candidate in an original medical image. Grouping together findings may be beneficial in assisting a medical professional, for example a radiologist, with recognizing similar findings that may be distributed throughout the medical image data.

The method automates the complex and time-consuming task of sorting and grouping findings and additionally mitigates the need to impose a threshold on the number of medical abnormality candidates. Grouping findings according to similarity between image descriptors enables different types of medical abnormality candidates to be grouped together, enabling different medical abnormality candidates to be discerned more readily than in prior art methods.

The medical image data that is received may comprise the original medical image.

The plurality of sets of data may be generated based on the image of the respective medical abnormality candidate in the original medical image.

The plurality of sets of data may be generated by a feature extraction process.

Optionally, the clustering algorithm is a k-means algorithm, a spectral clustering algorithm, a mean shift clustering algorithm, and a density-based spatial clustering of applications with noise (DBSCAN) algorithm.

The image descriptor of the medical abnormality candidate may comprise a feature vector.

Optionally, the method comprises determining components of the feature vector based on a feature learning process using an autoencoder, a variational autoencoder or a local binary pattern extraction method. The autoencoder enables a reduction of the complexity of the image descriptors. The feature vector may include a component having a value indicative of at least one of: an intensity characteristic, a shape characteristic and a texture characteristic.

Feature vectors advantageously provide an individual measurable property or characteristic that is represented by an n-dimensional vector.

The visual indicator may comprise at least one of: color markers and shape markers. Visual indicators provide the benefit of easily differentiating between different clusters.

Optionally, the medical abnormality candidates are identified based on the original medical image.

Optionally, the medical abnormality candidates are sorted according to their visual indicators and further presented in a grid.

According to a second aspect of the present invention, there is provided an apparatus for processing medical image data, comprising: one or more processors; and a memory storing: instructions that, when executed by the one or more processors, cause the one or more processors to: receive medical image data, and derive, from the medical image data, a plurality of sets of data, each of the sets of data comprising an image descriptor of an image of a respective medical abnormality candidate in an original medical image; apply a clustering algorithm to the plurality of sets of data to generate a plurality of groups based on a similarity between image descriptors of the sets of data, each of the plurality of groups comprising one or more of the plurality of sets of data, the plurality of groups including at least a first group comprising a first plurality of the sets of data; and generate a visual indicator to associate the first plurality of sets of data together.

Optionally, the apparatus comprises a screen. The screen may be configured to display a visual indicator to associate the first plurality of sets of data together.

According to a third aspect of the present invention, there is provided a computer program product comprising instructions which, when the program is executed by a computer, cause the computer to carry out the method according to the first aspect of the invention.

### Brief Description of the Drawings

The present invention will now be described, by way of example only, with reference to the accompanying drawings in which:
Figure 1 is a schematic diagram illustrating a computing device, according to an example;
Figure 2 is a flow diagram illustrating a method for processing medical data, according to an example;
Figure 3 is a flow diagram illustrating a feature extraction process, according to an example;
Figure 4 is a schematic diagram illustrating an autoencoder, according to an example;
Figure 5A is a schematic diagram illustrating a visualization of medical abnormality candidates, according to an example; and
Figure 5B is a schematic diagram illustrating a visualization of medical abnormality candidates, according to an example.

### Detailed Description

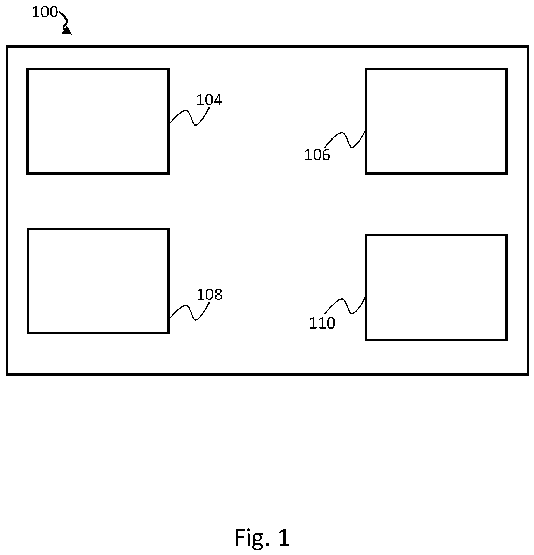

Figure 1 schematically illustrates an apparatus, in the form of computing device 100, for processing medical image data according to an example. The computing device 100 comprises one or more processors 104 and a memory 106. The memory 106 may be in the form of a computer readable storage medium, for example, read-only memory (ROM), random-access memory (RAM), solid state drive (SSD) etc.

The computing device 100 further comprises an input interface 108 for receiving data. The input interface 108 may comprise a communications interface for receiving medical image data, for example via wired or wireless means.

The computing device 100 further comprises an output interface 110, which may be an interface to output image data, for example to a display such as a screen.

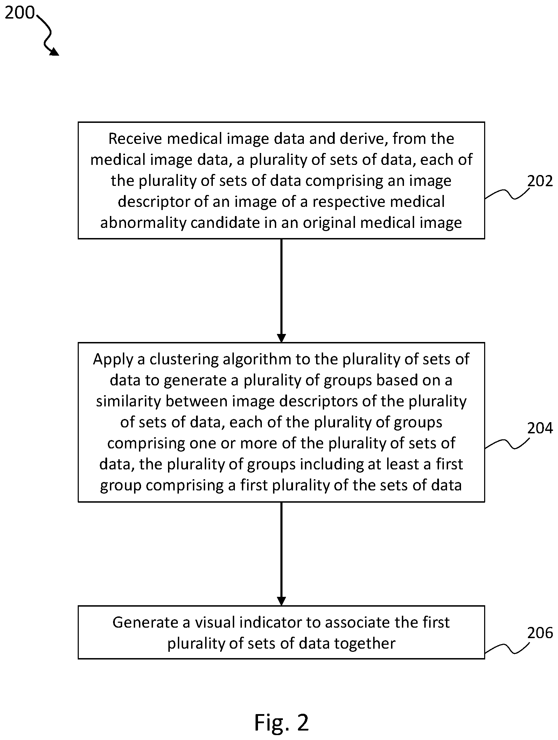

Figure 2 is a flow diagram illustrating a computer-implemented method 200 for processing medical image data, according to an example. The method 200 is hereafter referred to as the medical image processing method 200. The medical image processing method 200 may be performed by the computing device 100.

At step 202, the medical image processing method 200 includes receiving medical image data, and deriving, from the medical image data, a plurality of sets of data, each of the plurality of sets of data comprising an image descriptor of an image of a respective medical abnormality candidate in an original medical image. In an example, the one or more processors 104 perform the deriving.

The term medical abnormality is used herein to refer to a manifestation of an illness or injury, for example, such as nodules, lesions, tumors, areas of consolidation, regions of echogenicity and artefacts. A region of an image may be considered as a candidate for such an abnormality if it is identified, by a human or software algorithm, for example, as actually or potentially indicating that the abnormality is present.

The image descriptors may represent a description of the visual features of the contents of an image. The image descriptors may be based on low-level descriptors that each indicate a value of a characteristic of the image, such as intensity, shape or texture.

An example of a component of an image descriptor that may be used is a local binary pattern (LBP). This is a type of visual descriptor, which may be used for classifying textures, for example. An LBP may be generated by dividing an image under examination into cells and comparing each pixel in a cell to its 8 surrounding neighbor pixels. The neighbor pixels are assigned either a 0 or a 1 depending on their relative value. A histogram of the frequency of the 0s and 1s is then computed over the cell. This is repeated for all cells in the image and the histograms are concatenated to provide a feature vector for the entire image.

A particular type of image descriptor that may be used in the medical image processing method 200 according to an example is a feature vector.

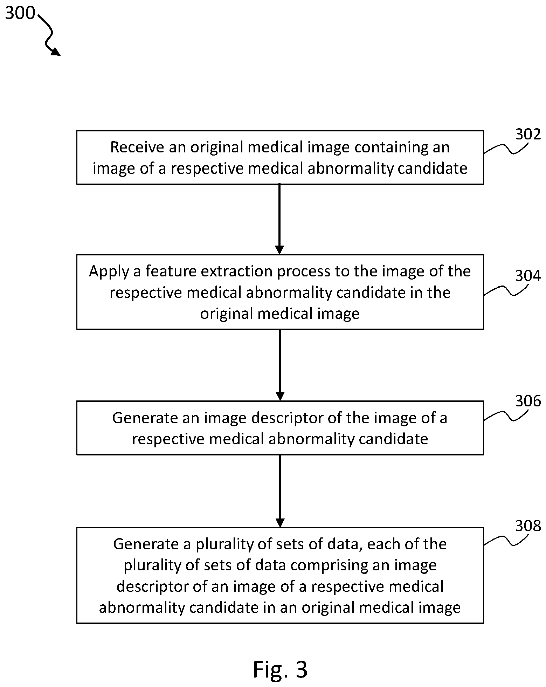

The feature vector may include multiple components (generated according to a local binary pattern as mentioned above, for example), each having a value that indicates a characteristic of the medical abnormality candidate in the original medical image. This may be at least one of: an intensity characteristic, a shape characteristic, and a texture characteristic. Further examples include a dimension, such as a diameter, or location within an anatomical setting of the medical abnormality candidate. An example of a process to generate image descriptors is described below with reference to Figure 3.

Once the plurality of sets of data, each of which comprises an image descriptor have been generated, a plurality of groups is generated via the application of a clustering algorithm.

At step 204 of the medical image processing method 200, a clustering algorithm is applied to the plurality of sets of data generated in step 202 to generate a plurality of groups, based on a similarity between image descriptors of the plurality of sets of data. Each of the plurality of groups includes one or more of the plurality of sets of data.

In an example, the clustering algorithm uses an iterative refinement process, such as a "k-means" algorithm. In this example, a target number *k* of centroids is set, each of the centroids representing a center in an appropriate space of a respective cluster. Accordingly, *k* also represents the number of clusters to be generated. The appropriate space referred to may be a space having dimensions corresponding to the components of the image descriptors e.g. feature vectors described above and may be referred to as a feature space.

The clustering process may proceed as follows:
1. Across the plurality of sets of data that are derived in step 202 described above, *k* centroids are initially randomly designated, by randomly assigning each data point (each representing the combination of value in an corresponding image descriptor) to a given cluster and calculating the centroid of each resulting cluster.
2. Each data point is re-assigned to the nearest cluster centroid calculated in 1.
3. New centroids of the groups resulting from 2. are calculated.

Steps 2 and 3 are repeated until the process terminates. The process may terminate after a predetermined number of iterations, or when the improvement between successive steps falls below a threshold, for example. The improvement may be determined by comparing the sum of squares of distances of the data points in a cluster between iterations, with a smaller sum of squares indicating an "improved" (more tightly bound) cluster.

In this manner, the plurality of sets of data are grouped together to form logical groups, on the basis of similarities between the image descriptors of the medical abnormality candidates in question. The output is a plurality of groups each comprising one or more of the plurality of sets of data.

Other clustering algorithms may be used. For example, a non-parametric clustering algorithms may be used. In these methods, the number of clusters is variable, and does not need to be specified in advance. Instead, the number of clusters can be set by the clustering algorithm in dependence of the characteristics of the data set. Factors that may influence the number of clusters include but are not limited to: the distance threshold between two descriptors for the descriptors to be treated as similar for the purposes of clustering, the degree of similarity between two descriptors, and the total number of findings within the image. Examples of non-parametric clustering methods include spectral clustering, mean shift clustering, and density-based spatial clustering of applications with noise (DBSCAN).

The clustering algorithm may be applied to the plurality of sets of data at the computing device 100 by the one or more processors 104.

The plurality of groups generated comprises at least a first group comprising a first plurality of the sets of data. To provide the medical professional with a usable output, a visual indicator is provided to associate at least the first plurality of sets together.

This is illustrated at step 206 of the medical image processing method 200, wherein a visual indicator to associate the first plurality of sets together is generated. The one or more processors 104 of computing device 100 may be configured to generate this visual indicator and provide it to output interface 110. Output interface 110 may be configured to display the visual indicator on a screen or similar display or provide a printed version of the visual indicator, for example.

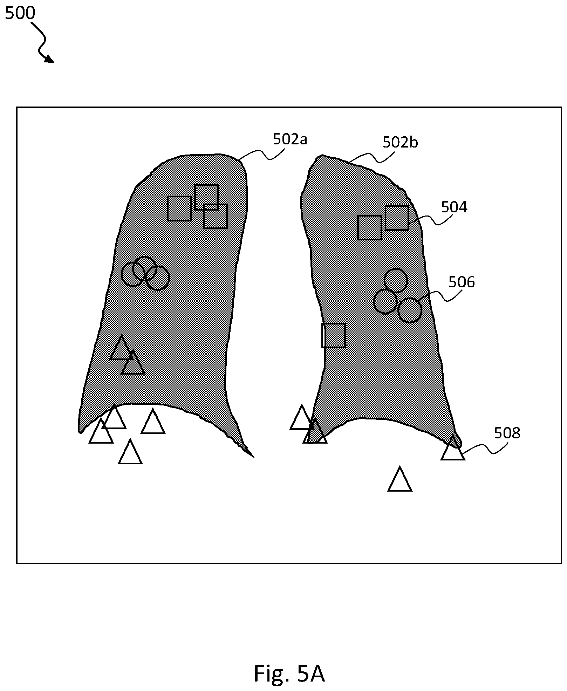

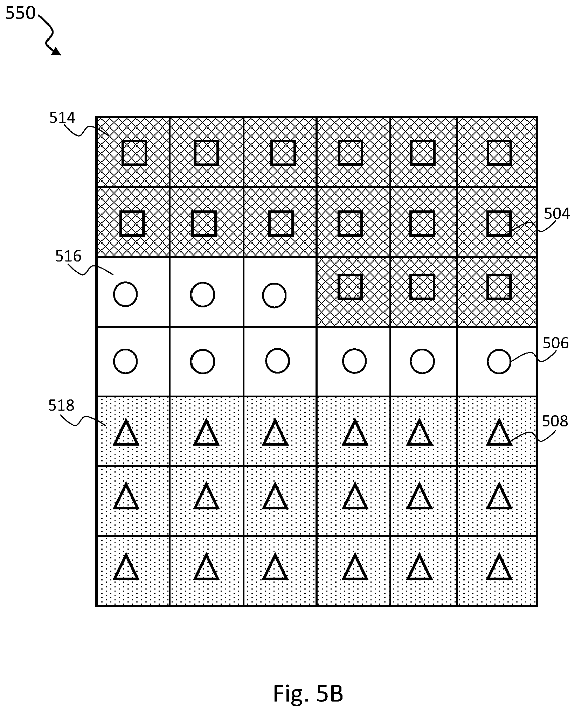

Visual indicators according to examples are described in more detail below with reference to Figures 5A and 5B.

Figure 3 is a flow diagram illustrating an example feature extraction process 300 to generate image descriptors.

At step 302 of feature extraction process 300, an original medical image containing an image of a respective medical abnormality candidate is received. The original medical image may be an MRI image, an X-ray image, digital breast tomosynthesis, a computed tomography scan, an ultrasound, or any other type of medical image data that can be analyzed to identify abnormalities within a human or animal body. The input interface 108 of computing device 100 may be configured to receive the original medical image.

The original medical image may represent an image volume within the human or animal body. For example, the original medical image may comprise one or a set of two dimensional (2D) images in one or more imaging planes. In another example, the medical image data may have been acquired using a three-dimensional (3D) acquisition process and may be in a 3D format. In a further example, 4D formatted medical image data may be acquired over a specified time period.

The original medical image may be for example a magnetic resonance imaging (MRI) scan, for example of a patient's lungs. Alternatively, the original medical image may be obtained according to any other suitable modality, for example, positron-emission tomography (PET) scan or a computerized tomography (CT) scan.

The part of the original medical image that contains an image of a respective medical abnormality candidate may be referred to as an image patch. An exemplary image patch may contain a pulmonary nodule in an original medical image of a lung.

The image patches containing the medical abnormality candidates may already have been identified at a different device, prior to receipt of the original medical image by computing device 100, in which case the medical image data received at step 202 includes data indicative of the image patches. Alternatively, the image patches containing the medical abnormality candidates may be identified by the one or more processors 104 of computing device 100. In either case, the identification of the image patches may be performed by a computer software process for computer aided diagnostics, which may be in the form of an automated algorithm, such as machine learning algorithm, for example, or manually, by a medical professional for example. As a result of the identification process, data may be added to the original medical image identifying the location of the image patches indicating the medical abnormality candidates.

At step 304, a feature extraction process is applied to the image of the respective medical abnormality candidate (image patch) in the original medical image. In one example, the feature extraction process comprises a principal component analysis (PCA) process. PCA is a statistical procedure that performs a linear mapping of the data to a lower-dimensional space such that the variance of the data in the low-dimensional representation is maximized. Other techniques may additionally or alternatively be used. Examples of techniques that may be applied to extract features from the image patches (by a computer algorithm for example) include edge detection, corner detection, blob detection (Laplacian of Gaussian; Difference of Gaussian; Determinant of Hessian), template matching and thresholding techniques.

Step 308 of feature extraction process 300 includes generating a plurality of sets of data, each of the plurality of sets of data comprising an image descriptor of an image of a respective medical abnormality candidate in an original medical image. The plurality of sets of data that are derived undergo clustering in step 204 of the medical image processing method 200.

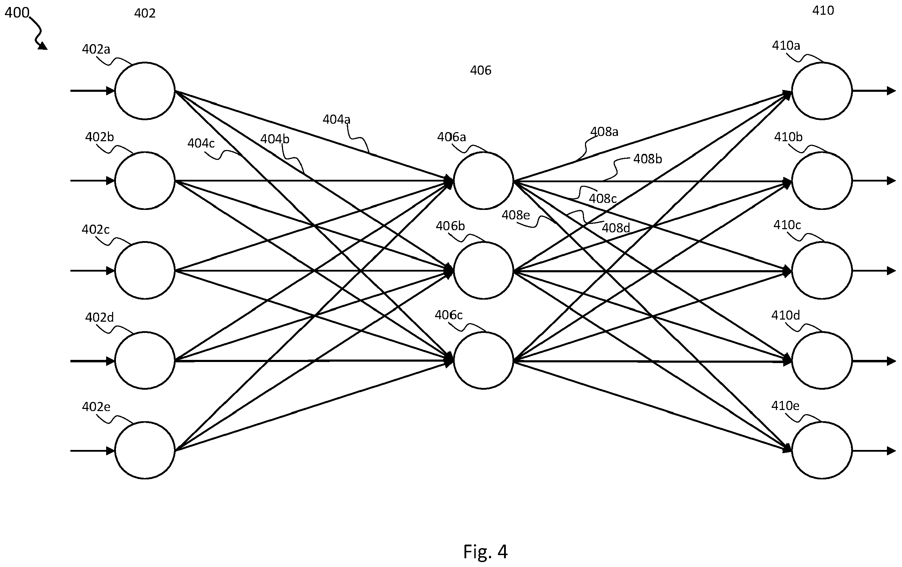

The features from which the image descriptors are generated in step 306 can be specified based upon a feature learning process, an example of which is described below with reference to Figure 4. In other examples, the features to be extracted may be specified based on expert knowledge, for example relating to the particular domain to which the method is to be employed.

The feature extraction process 300 may be performed by the computing device 100. In this case, the computing device 100 receives image data via the input interface 108, for example. As mentioned above, the received image data may comprise an original medical image, which may or may not include indications of image patches on which the feature extraction process is to be performed.

In other examples, the feature extraction process 300 may be performed on a further device, different from the computing device 100, so that the medical image data received at the input interface 108 includes the image descriptors of the image patches to which the clustering algorithm is to be applied.

As mentioned above, the image descriptors generated in step 306 can be specified based upon a feature learning process. This feature learning process may be carried out using an autoencoder, which is a type of artificial neural network which uses unsupervised learning techniques to compress and encode data, and then learns how to reconstruct the data back from the reduced encoded representation to a representation that is as close to the original input as possible.

Figure 4 is a schematic diagram illustrating an autoencoder 400, according to an example. In the example, the autoencoder 400 comprises a neural network, such as a non-recurrent neural network. The autoencoder comprises an input layer or encoder 402 comprising nodes 402a, 402b, 402c, 402d, 402e, a hidden layer or bottleneck 406, comprising nodes 406a, 406b and 406c, and an output layer, or decoder 410 comprising nodes 410a, 410b, 410c, 410d, 410e. Connections 404a, 404b and 404c are provided between the encoder 402 and the bottleneck 406. Further connections 408a, 408b, 408c, 408d and 408e are provided between the bottleneck 406 and the decoder 410. It will be appreciated that an autoencoder could have any number of nodes in each layer and may comprise further layers.

The autoencoder 400 may be trained according to an unsupervised training technique, using a training data set, to reconstruct image patches. In the training process, image patches are provided as input to the autoencoder, and reconstructions of the image patches are provided as outputs of the autoencoder. A reconstruction loss function, which computes a loss based on differences between the input image patches and the reconstructed image patches, may be used to apply back-propagation to train the autoencoder 400.

As illustrated, the bottleneck 406 includes fewer nodes than the encoder 402 or decoder 410. Accordingly, extracting data from the bottleneck 406 subsequent to training provides a reduced set of features to be used as the components of the image descriptors as described above.

In some examples of an autoencoder, the input layer includes one neuron per pixel (or one neuron per voxel in a 3D image). The output layer 410 may have a number of neurons equal to the input layer 402. After training, the effect of the reduced number of neurons at the bottleneck layer is that information describing the input image is encoded at the bottleneck 406 in the form of a reduced set of features.

After training, the outputs from the bottleneck layer 406 (which are all the same for a given input neuron) can be set as the basis for the components of the feature vector. For example, the output of neuron 406a, represented by each of the outputs 408a-408e, may be set as one of the components of the feature vector. The component may take the form of weighted sum of the inputs from the neurons 402a-402e of the encoder 402.

The autoencoder 400 may be implemented on the computing device 100, or on a separate computing device.

The visual indicators that are generated in step 206 of the medical image processing method 200 may take the form of any suitable label for distinguishing the plurality of groups (clusters) from one another. For example, markers which comprise different colors or shapes, numerical labels or simple outlines may be provided to differentiate the plurality of groups that are generated. Illustrative examples of visual indicators are depicted in Figures 5A and 5B.

Figure 5A is a schematic diagram illustrating a visualization 500 of the spatial distribution of identified medical abnormality candidates across a mean image volume. The diagram presents the distribution of the medical abnormality candidates and the number of them. In this particular example, the image is representative of a coronal view of the lungs 502a, 502b, obtained by taking the mean along the coronal axis of the entire volume.

Different groups of the plurality of groups are represented by different visual indicators 504, 506, 508. In the visualization 500, the same visual indicators are grouped together based on the similarity between their image descriptors.

Additionally, or alternatively, the medical abnormality candidates may be sorted according to their labels and further presented in a grid format wherein the similar findings are displayed near to one another to provide the medical professional with an effective overview of the plurality of groups.

Figure 5B is a schematic diagram illustrating a visualization 550 of the same data as showing inf figure 5A, presented in such a grid format. The same visual indicators 504, 506, 508 are carried through and used in this presentation of data. Image patches of the same type 514 (denoted by visual indicator 504), 516 (denoted by visual indicator 506), and 518 (denoted by visual indicator 508) are grouped together in the grid to provide a medical professional with an overview of all similar medical abnormality candidates displayed proximate to one another.

Although, in the present example, the shape of the visual indicators associates the members of a group of medical abnormality candidates together, other characteristics may be used such as colors, numbers, outlines or any other marker suitable for allowing a user to differentiate between the different groups.

The visual indicators may be used by a medical professional in analyzing the image patches containing the medical abnormality candidates. Because the image patches are categorized according to image descriptors, and clustered into groups having similar features, identification of multiple types of abnormality in the patient may be facilitated.

For example, in some cases, comorbidities, which are the presence of one or more additional conditions co-occurring with a primary condition, may be present. By generating and visually indicating groups of image patches with similar features, identification of these different conditions may be facilitated, since there is a high chance that the image patches with similar features relate to the same condition.

Further, the examples describe herein at least mitigate the need to cap the number of medical abnormality candidates that, for example, an automated algorithm may generate. Because image patches having similar features are grouped together, potentially irrelevant image patches (e.g. image patches that do not indicate an illness or injury) have a chance of being grouped together, and thus easily identified. This in turn reduces the risk of genuine abnormalities being overlooked.

While the invention has been illustrated and described in detail in the context of specific examples, the invention is not limited to the disclosed examples. Other variations can be deducted by those skilled in the art without leaving the scope of protection of the claimed invention.

## Claims

1. A computer-implemented method (200) for processing medical image data, the method comprising:
receiving (202) medical image data, and deriving, from the medical image data, a plurality of sets of data, each of the plurality of sets of data comprising an image descriptor of an image of a respective medical abnormality candidate in an original medical image ;
applying (204) a clustering algorithm to the plurality of sets of data to generate a plurality of groups (514, 516, 518) based on a similarity between image descriptors of the plurality of sets of data, each of the plurality of groups comprising one or more of the plurality of sets of data, the plurality of groups including at least a first group comprising a first plurality of the sets of data; and
generating (206) a visual indicator (504, 506, 508) to associate the first plurality of sets of data together.

2. The method according to claim 1, wherein the medical image data comprises the original medical image.

3. The method according to claim 2, comprising generating (308) the plurality of sets of data based on the images of the respective medical abnormality candidate in the original medical image.

4. The method according to claim 3, comprising the generating the plurality of sets of data using a feature extraction technique.

5. The method according to any of the preceding claims, wherein the clustering algorithm is any one of a k-means algorithm, a spectral clustering algorithm, a mean shift clustering algorithm, and a density-based spatial clustering of applications with noise (DBSCAN) algorithm.

6. The method according to any preceding claim, wherein the image descriptor comprises a feature vector.

7. The method according to claim 6, comprising determining components of the feature vector based on a feature learning process using an autoencoder (400), a variational autoencoder or a local binary pattern extraction method.

8. The method according to either of claim 6 and claim 7, wherein the feature vector includes a component having a value indicative of at least one of: an intensity characteristic, a shape characteristic and a texture characteristic.

9. The method according to any one of the preceding claims, wherein the visual indicator comprises at least one of: color markers and shape markers.

10. The method according to any one of the preceding claims, wherein the medical abnormality candidates are sorted according to their visual indicators and further presented in a grid arrangement (550).

11. The method according to any one of the preceding claims, comprising identifying the medical abnormality candidates based on the original medical image.

12. An apparatus (100) for processing medical image data, comprising:
one or more processors (104); and
a memory (106) storing instructions that, when executed by the one or more processors, cause the one or more processors to:
receive medical image data, and derive, from the medical image data, a plurality of sets of data, each of the sets of data comprising an image descriptor of an image of a respective medical abnormality candidate in an original medical image;
apply a clustering algorithm to the plurality of sets of data to generate a plurality of groups based on a similarity between image descriptors of the sets of data, each of the plurality of groups comprising one or more of the plurality of sets of data, the plurality of groups including at least a first group comprising a first plurality of the sets of data; and
generate a visual indicator (504, 506, 508) to associate the first plurality of sets of data together.

13. The apparatus according to claim 12, comprising a screen, wherein the apparatus is configured to display a visual indicator on the screen.

14. The apparatus according to claim 12, wherein the visual indicator comprises at least one of: color markers and shape markers.

15. A computer program product comprising instructions which, when the program is executed by a computer, cause the computer to carry out the method according to any of claims 1 to 11.
